# EUROPÄISCHE PATENTSCHRIFT

(11) **EP 2 242 467 B1**
(45) Veröffentlichungstag und Bekanntmachung des Hinweises auf die Patenterteilung: **03.08.2011**
(21) Anmeldenummer: 09702005.1
(22) Anmeldetag: 15.01.2009
(51) Int. Cl.: A61G 1/00, B62B 5/02

(54) **TRANSPORTVORRICHTUNG**
TRANSPORT DEVICE
DISPOSITIF DE TRANSPORT

(30) Priorität: 15.01.2008 DE 102008004527
(43) Veröffentlichungstag der Anmeldung: 27.10.2010
(73) Patentinhaber: Gjini, Ankileta, 37250 Osterode am Harz (DE)
(72) Erfinder: GJINI, Shkelzen, 37520 Osterode am Harz (DE); GJINI, Ankileta, 37520 Osterode am Harz (DE)
(74) Vertreter: Schneider, Peter Christian
(86) Internationale Anmeldenummer: PCT/EP2009/000205
(87) Internationale Veröffentlichungsnummer: WO 2009/090060

(56) Entgegenhaltungen:
- DE-A- 2 741 323
- DE-A1- 3 204 928
- DE-C- 662 667
- DE-U- 1 690 928
- DE-U1- 20 218 284
- FR-A- 2 303 504
- US-A- 2 302 950
- US-A- 3 346 270
- US-A- 3 752 527
- US-A1- 2004 007 908

## Beschreibung

### Gebiet der Erfindung

Die Erfindung betrifft eine Transportvorrichtung, insbesondere zur Überwindung von Höhenunterschieden, mit einem Untergestell und einer Auflagefläche für ein Transportgut oder eine zu transportierende Person.

### Stand der Technik

Bei Transportvorrichtungen, die beispielsweise im Sinne einer Trage zum Transport von Kranken oder auch von Gegenständen bei der Überwindung von Hindernissen, wie Treppen oder anderen Steigungen, genutzt werden, besteht das Problem, dass die Last auf der Auflagefläche verrutschen kann oder umständlich gesichert werden muss. Zudem kann es bei dem Transport von Kranken notwendig sein, diese in einer horizontalen Lage zu Transportieren.

So ist beispielsweise aus der DE 32 04 928 A1 welche alle Merkmale des Oberbegriffs des Anspruchs 1 offenbart, eine Tragevorrichtung bekannt, bei der als einsteckbare Rohre ausgebildete Tragegriffe an den beiden Enden einer Trage auf unterschiedlichen Höhen bzw. Ebenen angeordnet sind. Damit soll beim Treppensteigen ein waagerechter Transport der auf einer Auflagefläche angeordneten Last möglich sein. Nachteilig dabei ist, dass die unterschiedlichen Höhen für einen waagerechten Transport der Last an die Steigung der Treppe angepasst sein müssen. Bei unterschiedlichen Steigungen müssten somit die Tragerohre, soweit dies vorgesehen ist, relativ umständlich umgesteckt werden.

Weiterhin ist aus der DE 1 690 928 U ein Krankenfahr- und Tragstuhl bekannt, bei dem die Tragegriffe an der Vorderseite auf einer anderen Ebene angeordnet sind, als die Tragegriffe auf der Rückseite der Tragevorrichtung.

Nachteilig ist auch hierbei, dass die unterschiedlichen Ebenen nur für eine bestimmte Treppensteigung optimiert sein können.

Aus der FR 2 303 504 A2 ist eine Transportvorrichtung mit einem Untergestell, einer ersten Auflagefläche mit einem ersten Rahmen und einer zweiten als Rückenlehne ausgebildete Auflagefläche mit einem zweiten Rahmen bekannt. Der erste Rahmen weist dabei an seinem dem zweiten Rahmen zugewandtem Ende quer zur Längsrichtung an einander gegenüberliegenden Seiten in vertikaler Richtung zwei ringförmige Gelenkplatten auf. Die Gelenkplatten bilden dabei ringförmige Führungsschienen an denen zum einen das zweiteilige Untergestell, getrennt über seinen Teilen jeweils zugeordnete Führungsstücke, und der zweite Rahmen über ein ihm zugeordnetes Führungsstück einzeln verstellbar und verschwenkbar gelagert sind.

Nachteilig bei dieser bekannten Transportvorrichtung ist, dass sich die Teile des Untergestells und die zweigeteilten Auflageflächen zwar in eine Vielzahl von unterschiedlichen Positionen zueinander verschwenken lassen, dass jedoch diese Transportvorrichtung nicht geeignet ist, die Auflageflächen beim Treppensteigen und beim Überwinden von anderen Höhenunterschieden weitgehend waagerecht zu halten. Weiterhin nachteilig ist, dass die Transportvorrichtung durch die Vielzahl von Führungsstücken relativ aufwendig und kostenintensiv ausgebildet ist.

Aus der DE 27 41 323 A ist eine Transportvorrichtung mit einer von einem Rahmen unterstützten Auflagefläche und einem Untergestell bekannt. Der Rahmen mit Auflagefläche und das Untergestell sind dabei über ein festes Drehgelenk miteinander verbunden. Bogenförmig zum Drehpunkt des festen Drehgelenks ist am Rahmen eine Rastschiene angeordnet, über die der Rahmen mit dem Untergestell über eine handbetätigte Rastvorrichtung verrastbar und entriegelbar ist.

Bei dieser bekannten Vorrichtung ist es zwar möglich, bei einer Auslenkung bzw. Schräglage des Untergestells zur Überwindung von Höhenunterschieden, die Auflagefläche in eine horizontale Lage zu bringen; es ist aber keinesfalls möglich, dass sich der Rahmen mit Auflagefläche aufgrund der Schwerkraft in einer ausgelenkten Stellung des Untergestells selbstständig in die Horizontale schwenkt.

Aus der US 3 752 527 A ist eine Transportvorrichtung bekannt, die einen eine Auflagefläche unterstützenden Rahmen aufweist, der über ein mit einer Rastvorrichtung verbundenes Hebelgelenk verschwenkbar mit einem zusammenklappbaren Untergestell verbunden ist. Mit dieser Vorrichtung können zwar zwei höhenversetzte Ebenen überwunden werden, aufgrund der Hebelmechanik weist dabei die Auflagefläche jedoch immer parallel zur Ebene des Untergestells. Soweit das Untergestell auf einer schrägen Ebene sich befindet, ist die Auflagefläche ebenfalls schräg angeordnet. Bei dieser Transportvorrichtung ist es zudem prinzipiell nicht möglich, dass der Rahmen mit Auflagefläche sich aufgrund der Schwerkraft selbstständig in die Horizontale schwenkt.

Auch aus der US 3 346 270 A ist eine Transportvorrichtung bekannt, die eine von einem Rahmen unterstützte Auflagefläche aufweist. Der Rahmen ist ebenfalls wie bei der US 3,752,527 A an einem Ende mit einem ersten Teil schwenkbar über ein festes Drehgelenk verbunden. Das Untergestell weist ein zweites Teil auf, das einerseits über ein festes Drehgelenk mit dem ersten Teil verbunden ist und andererseits über ein Hebelgelenk ebenfalls mit dem Rahmen verbunden ist. Zur Fixierung von der Auflagefläche gegenüber dem Untergestell ist ebenfalls eine verrastbare und entriegelbare Rastverbindung vorgesehen.

Auch aus der DE 662 667 C ist eine Transportvorrichtung bekannt, die eine von einem Rahmen unterstützte Auflage aufweist. Dabei ist der Rahmen an einem Ende über ein festes Drehgelenk mit einem Untergestell schwenkbar verbunden. Über eine bogenförmig zu dem fixen Drehpunkt angeordnete Rastschiene einer Rastvorrichtung lässt sich der Rahmen gegenüber dem Untergestell manuell verschwenken und verrasten bzw. entriegeln.

Aber auch hier ist nachteilig, dass der Rahmen mit seiner Auflagefläche sich nicht aufgrund der Schwerkraft selbstständig in die Horizontale schwenken kann.

Aus der DE 202 18 284 U1 ist eine Liege bekannt, die nicht als eine Transportvorrichtung geeignet ist. Die Liege besteht aus einer Auflagefläche, die von einem bogenförmig ausgebildeten Rahmen unterstützt wird. Der Rahmen liegt lose auf einer entsprechend geformten Stützfläche eines Untergestells auf. Die Auflagefläche mit Rahmen kann dabei in eine beliebige Position verschwenkt werden.

Aus der US 2 302 950 A ist ein Schaukelstuhl bekannt, der von daher ebenfalls gerade nicht als eine Transportvorrichtung geeignet ist und von einem Fachmann für die Konstruktion einer Transportvorrichtung nicht herangezogen werden würde. Der Schaukelstuhl besteht aus einer Auflagefläche, die von seitlichen Profilen unterstützt wird. Die seitlichen Profile weisen bogenförmige Abrollflächen auf, die mit bogenförmigen Flächen von benachbarten Führungsschienen eines Untergestells in Verbindung stehen. Somit ermöglicht der Schaukelstuhl eine von dem Benutzer initiierte Schaukelbewegung, die von Sicherungselementen begrenzt wird.

Aus der US 2004/007908 A1 ist ebenfalls ein Schaukelstuhl bekannt, der zwar durch einfache Demontage und Montage leicht zu transportieren ist, der aber ebenfalls nicht als Transportvorrichtung geeignet ist. Dieser Schaukelstuhl weist eine mit einem Rahmen verbundene Sitzfläche auf, die ihrerseits fest mit einem Untergestell verbunden ist. Das Untergestell weist seitliche bogenförmig Schienen auf, die in korrespondierenden Bodenschienen benutzerinitiierte Schaukelbewegungen durchführen können.

### Aufgabenstellung

Aufgabe der vorliegenden Erfindung ist es daher, eine Vorrichtung bereitzustellen, bei der es möglich ist, die Last bzw. ihre Auflagefläche beim Treppensteigen und beim Überwinden von anderen Höhenunterschieden weitgehend waagerecht zu halten

### Lösung der Aufgabe

Diese Aufgabe wird in Verbindung mit dem Oberbegriff des Anspruches 1 dadurch gelöst, dass das Untergestell in Längsrichtung mindestens eine in einer parallel zur Längsrichtung angeordneten vertikalen Ebene bogenförmig ausgebildete Führungsschiene aufweist, die mit einer sich über die Länge des Rahmens erstreckenden Schiene des Rahmens über ein bogenförmiges Führungsstück korrespondiert, und dass bei einer gegenüber einer Horizontalen in Längsrichtung ausgelenkten Stellung des Untergestells der Rahmen die mit Auflagefläche sich aufgrund der Schwerkraft um eine quer zur Längsrichtung des Untergestells oberhalb der Auflagefläche angeordnete virtuelle Achse in die Horizontale schwenkt.

Dadurch, dass der Rahmen und das Untergestell schwenkbar um eine virtuelle Schwenkachse, die in einem Abstand oberhalb der Auflagefläche angeordnet ist, miteinander verbunden sind, kann bei einer Schräglage des Untergestells wegen der Überwindung eines Höhenunterschieds der Rahmen mit der Auflagefläche und einer Last sich einfach aufgrund der Schwerkraft in seine waagerechte Lage schwenken. So kann ein Verrutschen der Last bzw. des Transportgutes zuverlässig vermieden werden. Durch die bogenförmige Ausbildung der Führungsschienen wird ein Verschwenken des Rahmens um das Zentrum eines Kreises mit dem Radius des Bogens der Führungsschienen ermöglicht. Soweit die Schienen des Rahmens ebenfalls bogenförmig ausgebildet sind, sind die Führungsstücke dabei jeweils mit der zugeordneten Schiene des Rahmens fest verbunden.

Gemäß einer bevorzugten Ausführungsform der Erfindung weist das Untergestell zwei Führungsschienen auf, die mit zwei Schienen des Rahmens über Führungsstücke korrespondieren.

Grundsätzlich ist es aber auch möglich, das Untergestell mit einer mittig angeordneten Führungsschiene auszubilden, die mit einer mittig angeordneten Schiene des Rahmens korrespondiert. Dies kann den Transport in engen Treppenhäusern erleichtern. Gegebenenfalls müssen die Führungsschienen und/oder Schienen und die Führungsstücke profiliert werden, um ein seitliches Kippen zu verhindern.

Die Führungsstücke gewährleisten ein relativ reibungsarmes Gleiten zwischen Rahmen und Untergestell. Durch Wälz- bzw. Kugellager in den Führungsstücken kann dabei die Reibung noch vermindert werden.

Gemäß einer weiteren bevorzugten Ausführungsform der Erfindung umgreifen die Führungsstücke die Führungsschienen und werden gleitend über die Führungsschienen geführt.

Nach einer weiteren bevorzugten Ausführungsform der Erfindung ist der Rahmen über seine Schienen längs verschieblich in den Führungsstücken gelagert. Die Schienen des Rahmens sind zu diesem Zweck geradlinig ausgebildet.

Dadurch ist der Rahmen mit der Auflagefläche einerseits in die Horizontale schwenkbar und andererseits in der Horizontalen längs verschiebbar. Dies ist insbesondere in engen Treppenhäusern von Vorteil

Gemäß einer weiteren bevorzugten Ausführungsform der Erfindung sind die Schienen des Rahmens in einer parallel zur Längsrichtung angeordneten vertikalen Ebene bogenförmig ausgebildet. Die Führungsstücke umgreifen die Schienen des Rahmens und werden gleitend über die Schienen geführt.

Durch die bogenförmige Ausbildung der Schienen des Rahmens wird ebenfalls ein Verschwenken des Rahmens um das Zentrum eines Kreises mit dem Radius des Bogens der Schienen ermöglicht. Soweit die Führungsschienen ebenfalls bogenförmig sind, sind die Führungsstücke dabei jeweils mit der zugeordneten Führungsschiene des Untergestells fest verbunden.

Nach einer weiteren bevorzugten Ausführungsform der Erfindung sind die Führungsschienen mindestens teilweise in Längsrichtung gerade ausgebildet, und der Rahmen ist über seine Führungsstücke längs verschieblich gegenüber den Führungsschienen des Unterteiles angeordnet.

Auch dies ist beim Transportieren in engen Treppenhäusern von Vorteil.

Gemäß einer weiteren bevorzugten Ausführungsform der Erfindung ist die Vorrichtung als eine Transporttrage ausgebildet. Dabei kann die Auflagefläche in einer parallel zum Rahmen angeordneten Ebene drehbar ausgebildet und eine längliche Unterlage an der Auflagefläche befestigt sein.

Vorzugsweise ist die Auflagefläche an einer am Rahmen längsverschieblich angeordneten Aufnahme angeordnet.

Dadurch wird ein Transport auf engstem Raum, beispielsweise in einem Treppenhaus, unterstützt. Ergänzend kann die Unterlage an mindestens einem Ende abgerundete Ecken aufweist.

Nach einer weiteren bevorzugten Ausführungsform der Erfindung ist die Vorrichtung als eine Karre ausgebildet, die an einem Ende mindestens ein Rad aufweist. Eine erfindungsgemäße Karre weist ebenfalls die oben beschriebenen Vorteile auf. Je nach Transportgut kann die Auflagefläche wannenförmig ausgebildet sein.

Gemäß einer weiteren bevorzugten Ausführungsform der Erfindung ist die Vorrichtung als ein Kinderwagen ausgebildet. Entsprechend weist sie mindestens drei bzw. bevorzugt vier Räder auf. Zur leichteren Überwindung von Treppen, können die der Treppe zugewandten hinteren Räder wegklappbar ausgebildet sein.

Gemäß einer weiteren bevorzugten Ausführungsform der Erfindung ist die Vorrichtung als ein Schlitten ausgebildet, bei dem das Transportgut ebenfalls in einer waagerechten Lage transportierbar ist.

Weitere Merkmale der Erfindung ergeben sich aus der nachfolgenden ausführlichen Beschreibung und den beigefügten Zeichnungen, in denen bevorzugte Ausführungsformen der Erfindung beispielhaft veranschaulicht sind.

### Kurzbeschreibungen der Zeichnungen

In den Zeichnungen zeigen:
- Figur 1:: eine räumliche Darstellung einer als Trage ausgebildeten Transportvorrichtung,
- Figur 2:: eine Seitenansicht einer weiteren als Trage ausgebildeten Transportvorrichtung,
- Figur 3:: eine Seitenansicht der Transportvorrichtung von Figur 2 in Schräglage mit horizontal ausgerichteter Auflagefläche,
- Figur 4:: eine Seitenansicht einer weiteren Transportvorrichtung mit einem Rahmen mit gerade ausgebildeten Schienen,
- Figur 5:: eine Seitenansicht einer weiteren als Karre ausgebildeten Transportvorrichtung mit einem Rahmen mit bogenförmig ausgebildeten Schienen und
- Figur 6:: eine Seitenansicht einer weiteren als Karre ausgebildeten Transportvorrichtung mit einem Rahmen mit bogenförmig ausgebildeten Schienen und einer um zwei Achsen schwenkbaren und am Rahmen längs verschieblichen Auflage.

### Beschreibung eines Ausführungsbeispiels

Eine Transportvorrichtung 1 besteht im Wesentlichen aus einem Untergestell 2, und einem Auflagengestell 3 mit einem Rahmen 4.

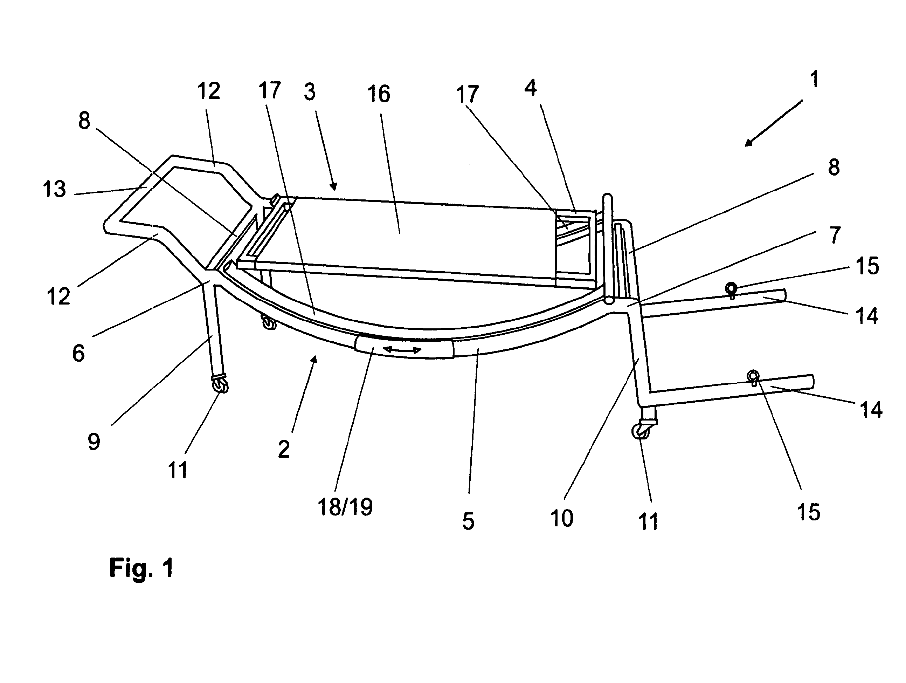

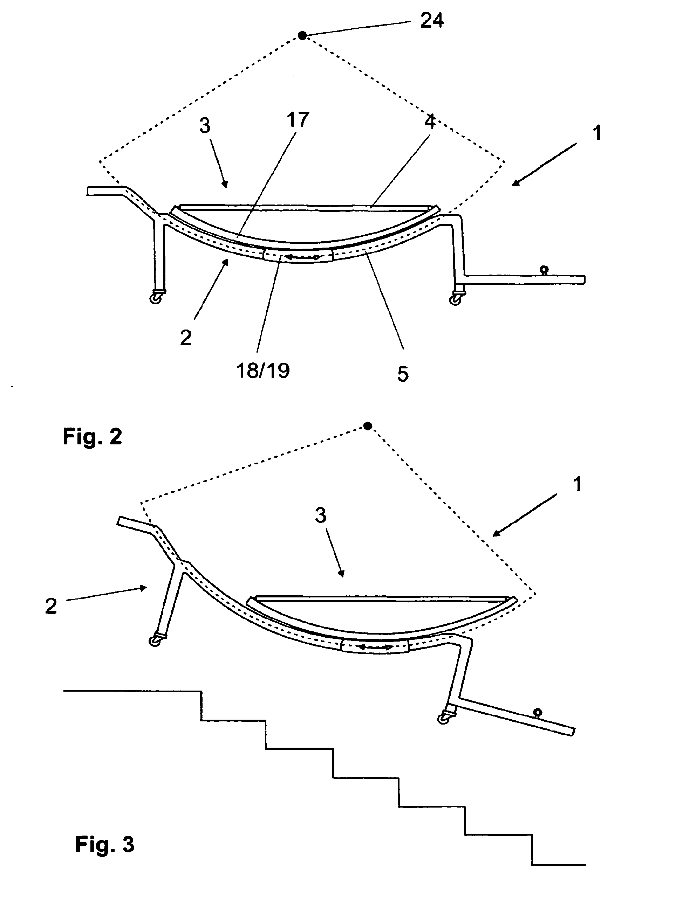

Entsprechend den Ausführungsbeispielen der Figuren 1 bis 3 besteht das Untergestell 2 aus zwei parallel zur Längsrichtung angeordneten bogenförmigen Führungsschienen 5, die über an dem vorderen Ende 6 und an dem hinteren Ende 7 angeordnete Querstreben 8 miteinander verbunden sind.

An dem vorderen Ende 6 sind zwei vordere vertikale Stützen 9 und am hinteren Ende 7 sind zwei hintere vertikale Stützen 10 angeordnet. An ihren freien unteren Enden weisen die vertikalen Stützen 9, 10 Räder 11 auf. Am vorderen Ende 6 des Untergestells 2 weisen an ihren den unteren Enden abgewandten oberen Enden die vorderen Stützen 9 zwei vordere Trageholme 12 auf, die über einen Bügel 13 miteinander verbunden sein können. Am hinteren Ende 7 des Untergestells 2 weisen an ihren unteren Enden die hinteren Stützen 10 zwei Trageholme 14 auf. An den Trageholmen 14 sind jeweils Ösen 15 vertikal nach oben angeordnet. In die Ösen 15 können nicht dargestellte Tragegurte eingehakt werden.

Das Auflagengestell 3 besteht aus einer Auflagefläche 16, die von dem Rahmen 4 unterstützt wird. Entsprechend den Ausführungsbeispielen der Figuren 1 bis 3 weist der Rahmen 4 bzw. das Untergestell 2 zwei parallele bogenförmige Schienen 17 auf. Die Schienen 17 sind jeweils fest mit einem Führungsstück 18 verbunden. Die Führungsstücke 18 sind als bogenförmige Rohrstücke bzw. Bogenstücke 19 ausgebildet, die die Führungsschienen 5 umgreifen und gleitend auf den Führungsschienen 5 verschiebbar sind. Somit lässt sich das Auflagengestell 3 bzw. der Rahmen 4 mit der Auflagefläche 16 gegenüber dem Untergestell 2 um eine quer zur Längsrichtung angeordnete virtuelle Achse 24, die oberhalb der Auflagefläche 16 des Auflagengestells 3 angeordnet ist, verschwenken.

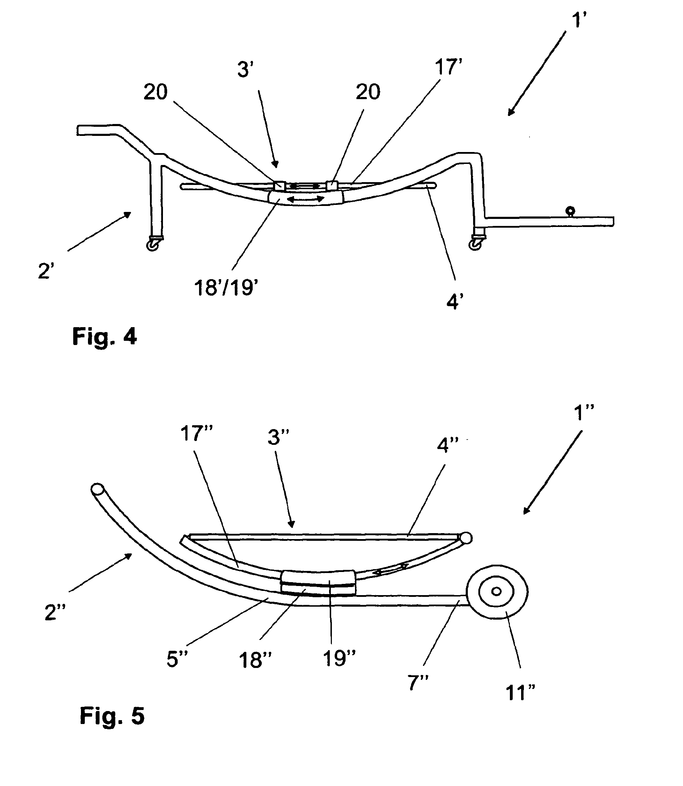

Entsprechend dem Ausführungsbeispiel von Figur 4 sind die Schienen 17' der Transportvorrichtung 1' gerade ausgebildet und bilden die Längsseiten des Rahmens 4'. Die Führungsstücke 18' werden von einem auf den Führungsschienen 5' gleitenden Bogenstück 19' und zwei Führungshülsen 20, in denen die Schienen 17' längsverschieblich gelagert sind, gebildet. Damit ist das Auflagengestell 3' gegenüber dem Untergestell 2'schwenkbar und längsverschieblich gelagert.

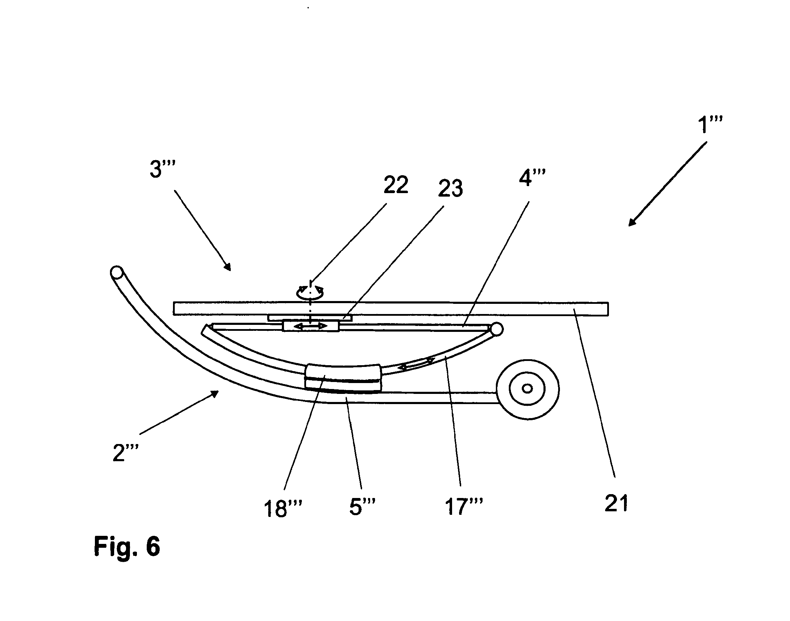

Die Transportvorrichtung 1'' nach dem Ausführungsbeispiel von Figur 5 weist ein Untergestell 2'' auf, an dessen hinterem Ende 7'' zwei Räder 11'' angeordnet sind. Die Führungsstücke 18'' sind fest mit den Führungsschienen 5'' verbunden, beispielsweise verschweißt, während die Schienen 17'' des Rahmens 4'' bzw. des Auflagengestells 3'' gleitend in den Bogenstücken 19'' der Führungsstücke 18'' geführt werden. Die Transportvorrichtung 1''' nach dem Ausführungsbeispiel von Figur 6 weist ein Auflagengestell 3''' mit einer am Rahmen 4''' angeordneten Auflage 21 auf. Die Auflage 21 ist über eine um eine vertikale Achse 22 schwenkbare Aufnahme 23 mit dem Rahmen 4''' verbunden. Die Aufnahme 23 ist mit der Auflagefläche an dem Rahmen 4''' längs verschieblich gelagert. Der Rahmen 4''' ist mit seinen bogenförmig ausgebildeten Schienen 17''' in einer vertikalen Ebene gegenüber dem Untergestellt 2''' verschwenkbar und damit auch die Auflage 21.

## Patentansprüche

1. Transportvorrichtung, insbesondere zur Überwindung von Höhenunterschieden, mit einem Untergestell (2, 2', 2'') und einer Auflagefläche (16) für ein Transportgut oder eine zu transportierende Person,
**dadurch gekennzeichnet,**
**dass** die Auflagefläche (16) von einem Rahmen (4, 4', 4'', 4''') unterstützt wird,
**dass** der Rahmen (4, 4', 4'', 4''') schwenkbar mit dem Untergestell (2, 2', 2'', 2''') verbunden ist,
**dass** das Untergestell (2, 2', 2'', 2''') in Längsrichtung mindestens eine in einer parallel zur Längsrichtung angeordneten vertikalen Ebene bogenförmig ausgebildete Führungsschiene (5, 5', 5'') aufweist, die mit einer sich über die Länge des Rahmens (4, 4' 4'', 4''') erstreckenden Schiene (17, 17', 17'', 17''') des Rahmens (4, 4', 4", 4''') über ein bogenförmiges Führungsstück (18, 18', 18'', 18''') korrespondiert, und
**dass** bei einer gegenüber einer Horizontalen in Längsrichtung ausgelenkten Stellung des Untergestells (2, 2', 2'', 2''') der Rahmen (4, 4', 4'', 4''') mit Auflagefläche (15) sich aufgrund der Schwerkraft um eine quer zur Längsrichtung des Untergestells (2, 2', 2'') oberhalb der Auflagefläche (16) angeordnete virtuelle Achse (24) in die Horizontale schwenkt.

2. Transportvorrichtung nach Anspruch 1,
**dadurch gekennzeichnet,**
**dass** das Untergestell (2, 2', 2'', 2''') zwei Führungsschienen (5, 5', 5'') aufweist, die mit zwei Schienen (17, 17', 17'', 17''') des Rahmens (4, 4', 4'', 4''') über Führungsstücke (18, 18', 18'', 18''') korrespondieren.

3. Transportvorrichtung nach Anspruch 2,
**dadurch gekennzeichnet,**
**dass** die Führungsstücke (18, 18') die Führungsschienen (5, 5') umgreifen und gleitend über die Führungsschienen (5, 5') geführt werden.

4. Transportvorrichtung nach Anspruch 3,
**dadurch gekennzeichnet,**
**dass** die Führungsstücke (18)jeweils mit der zugeordneten Schiene (17) des Rahmens (4) fest verbunden sind.

5. Transportvorrichtung nach Anspruch 3,
**dadurch gekennzeichnet,**
**dass** der Rahmen (4') über seine Schienen (17') längs verschieblich in den Führungsstücken (18') gelagert ist.

6. Transportvorrichtung nach Anspruch 2,
**dadurch gekennzeichnet,**
**dass** die Schienen (17, 17'', 17''') des Rahmens (4, 4'', 4''') in einer parallel zur Längsrichtung angeordneten vertikalen Ebene bogenförmig ausgebildet sind und dass die Führungsstücke (18, 18'', 18''') die Schienen (17, 17'', 17''') des Rahmens (4, 4'', 4''') umgreifen und gleitend über die Schienen (17, 17'', 17''') geführt werden.

7. Transportvorrichtung nach Anspruch 6,
**dadurch gekennzeichnet,**
**dass** die Führungsstücke (18'', 18''') jeweils mit der zugeordneten Führungsschiene (5'', 5''') des Untergestells (2'', 2''') fest verbunden sind.

8. Transportvorrichtung nach Anspruch 6,
**dadurch gekennzeichnet,**
**dass** die Führungsschienen (5'', 5''') mindestens teilweise in Längsrichtung gerade ausgebildet sind, und dass der Rahmen (4'', 4''') über seine Führungsstücke (18'', 18''') längs verschieblich gegenüber den Führungsschienen (5'', 5''') des Unterteiles (2'', 2''') angeordnet ist.

9. Transportvorrichtung nach einem der Ansprüche 1 bis 8,
**dadurch gekennzeichnet,**
**dass** die Vorrichtung als eine Transporttrage ausgebildet ist.

10. Transportvorrichtung nach Anspruch 9,
**dadurch gekennzeichnet,**
**dass** eine längliche Auflage (21) vorgesehen ist, die über eine um eine vertikale Achse (22) schwenkbare Aufnahme (23) mit dem Rahmen (4''') verbunden ist.

11. Transportvorrichtung nach Anspruch 10,
**dadurch gekennzeichnet,**
**dass** die Auflage (21) an mindestens einem Ende abgerundete Ecken aufweist.

12. Transportvorrichtung nach einem der Ansprüche 1 bis 8,
**dadurch gekennzeichnet,**
**dass** die Vorrichtung als eine Karre ausgebildet ist, die an einem Ende mindestens ein Rad (11'') aufweist.

13. Transportvorrichtung nach Anspruch 12,
**dadurch gekennzeichnet,**
**dass** die Auflagefläche wannenförmig ausgebildet ist.

14. Transportvorrichtung nach einem der Ansprüche 1 bis 8,
**dadurch gekennzeichnet,**
**dass** die Vorrichtung als ein Kinderwagen ausgebildet ist.

15. Transportvorrichtung nach einem der Ansprüche 1 bis 8,
**dadurch gekennzeichnet,**
**dass** die Vorrichtung als ein Schlitten ausgebildet ist.

## Claims

1. Transport device, especially for overcoming height differences, with a base frame (2, 2', 2'') and a supporting surface (16) for goods or a person to be transported,
**characterised by** the fact
that the supporting surface (16) is mounted on a frame (4, 4', 4'', 4'''),
that the frame (4, 4', 4'', 4'') is pivotably attached to the base frame (2, 2', 2'', 2'''),
that in the longitudinal direction the base frame (2, 2', 2'', 2''') has at least one bow-shaped guide rail (5, 5', 5'') in a vertical plane oriented parallel to the longitudinal direction, said guide rail corresponding to a rail (17, 17', 17'', 17''') on the frame (4, 4', 4", 4''') extending over the length of the frame (4, 4' 4'', 4''') by means of a bow-shaped guide piece (18, 18', 18'', 18'''), and
that, as a result of gravity, when the position of the base frame (2, 2', 2", 2''') deviates longitudinally from the horizontal, the frame (4, 4', 4'', 4"') and supporting surface (15) pivot into a horizontal position about a virtual axis (24) oriented at right angles to the longitudinal direction of the base frame (2, 2', 2'') and located above the supporting surface (16).

2. Transport device according to Claim 1,
**characterised by** the fact
that the base frame (2, 2', 2'', 2''') has two guide rails (5, 5', 5'') corresponding to two rails (17, 17', 17'', 17''') on the frame (4, 4', 4'', 4''') by means of guide pieces (18, 18', 18'', 18''').

3. Transport device according to Claim 2,
**characterised by** the fact
that the guide pieces (18, 18') encompass the guide rails (5, 5') and slide along the guide rails (5, 5').

4. Transport device according to Claim 3,
**characterised by** the fact
that each of the guide pieces (18) is rigidly attached to the corresponding rail (17) of the frame (4).

5. Transport device according to Claim 3,
**characterised by** the fact
that the frame (4') is mounted on its rails (17') such that it can move longitudinally within the guide pieces (18').

6. Transport device according to Claim 2,
**characterised by** the fact
that the rails (17, 17", 17''') on the frame (4, 4", 4''') are designed as bow-shaped in a vertical plane oriented parallel to the longitudinal direction and that the guide pieces (18, 18'', 18"') encompass the rails (17, 17", 17''') on the frame (4, 4", 4''') and slide along the rails (17, 17'', 17''').

7. Transport device according to Claim 6,
**characterised by** the fact
that each of the guide pieces (18'', 18''') is rigidly attached to the corresponding guide rail (5", 5''') of the base frame (2'', 2''') .

8. Transport device according to Claim 6,
**characterised by** the fact
that at least some of the guide rails (5'', 5''') are designed to be straight in the longitudinal direction, and that the frame (4'', 4''') is oriented such that it can move longitudinally to the guide rails (5'', 5''') on the bottom section (2'', 2''') by means of its guide pieces (18'', 18''').

9. Transport device according to any of Claims 1 to 8,
**characterised by** the fact
that the device is designed as a transport stretcher.

10. Transport device according to Claim 9,
**characterised by** the fact
that an elongated supporting surface (21) is provided, which is connected to the frame (4''') by means of a holding fixture (23) that pivots about a vertical axis (22).

11. Transport device according to Claim 10,
**characterised by** the fact
that the supporting surface (21) has rounded corners on at least one end.

12. Transport device according to any of Claims 1 to 8,
**characterised by** the fact
that the device is designed as a cart having at least one wheel (11'') at one end.

13. Transport device according to Claim 12,
**characterised by** the fact
that the supporting surface is trough-shaped.

14. Transport device according to any of Claims 1 to 8,
**characterised by** the fact
that the device is designed as a child's push chair.

15. Transport device according to any of Claims 1 to 8,
**characterised by** the fact
that the device is designed as a sledge.

## Revendications

1. Dispositif de transport, destiné particulièrement à surmonter des différences de hauteur, comportant un cadre de base (2, 2', 2'') et une surface d'appui (16) pour le transport de marchandises ou d'une personne,
**caractérisé en ce que**
la surface d'appui (16) est montée sur un cadre (4, 4', 4", 4''') ; que le cadre (4, 4', 4'', 4'') est fixé de manière à pivoter sur le cadre de base (2, 2', 2", 2''') ; que le cadre de base (2, 2', 2'', 2"'), dans la direction longitudinale, comporte au moins un rail de guidage en forme d'arc (5, 5', 5") dans un plan vertical orienté parallèlement à la direction longitudinale, ledit rail de guidage correspondant avec un rail (17, 17', 17'', 17''') sur le cadre (4, 4', 4", 4''') , qui s'étend sur la longueur du cadre (4, 4', 4'', 4"') par le moyen d'une pièce de guidage en forme d'arc (18, 18', 18'', 18''') ;
et qu'en raison de la gravité, quand la position du cadre de base (2, 2', 2'', 2''') dévie longitudinalement du plan horizontal, le cadre (4, 4', 4'', 4''') et la surface d'appui (15) pivotent vers une position horizontale autour un axe virtuel (24) orienté transversalement par rapport à la direction longitudinale du cadre de base (2, 2', 2'', 2''') et situé au-dessus de la surface d'appui (16).

2. Dispositif de transport selon la revendication 1,
**caractérisé en ce que**
le cadre de base (2, 2', 2", 2''') comporte deux rails de guidage (5, 5', 5'') correspondant avec deux rails (17, 17', 17'', 17''') sur le cadre (4, 4', 4'', 4''') par le moyen de pièces de guidage (18, 18', 18", 18''').

3. Dispositif de transport selon la revendication 2,
**caractérisé en ce que**
les pièces de guidage (18, 18') enserrent les rails de guidage (5, 5') sur lesquels ils glissent.

4. Dispositif de transport selon la revendication 3,
**caractérisé en ce que**
chacune des pièces de guidage (18) est fixée de manière rigide au rail correspondant (17) du cadre (4).

5. Dispositif de transport selon la revendication 3,
**caractérisé en ce que**
le cadre (4') est supporté par ses rails (17') de façon à pouvoir se déplacer longitudinalement entre les pièces de guidage (18').

6. Dispositif de transport selon la revendication 2,
**caractérisé en ce que**
les rails (17, 17'', 17''') sur le cadre (4, 4'', 4''') sont conçus en forme d'arc dans un plan vertical orienté parallèlement à la direction longitudinale et **en ce que** les pièces de guidage (18, 18'', 18"') enserrent les rails (17, 17'', 17''') sur le cadre (4, 4'', 4''') et glissent sur lesdits rails (17, 17'', 17''').

7. Dispositif de transport selon la revendication 6,
**caractérisé en ce que**
chacune des pièces de guidage (18'', 18''') est fixée de façon rigide au rail de guidage correspondant (5'', 5''') du cadre de base (2, 2', 2'', 2"') .

8. Dispositif de transport selon la revendication 6,
**caractérisé en ce que**
les rails de guidage (5'', 5"'), en direction longitudinale, sont au moins partiellement droites, et que le cadre (4", 4''') est arrangé de telle sorte qu'il puisse se déplacer longitudinalement par rapport aux rails de guidage (5'', 5''') sur la section inférieure (2'', 2''') par le moyen de ses pièces de guidage (18'', 18''') .

9. Dispositif de transport selon l'une quelconque des revendications 1 à 8,
**caractérisé en ce que**
le dispositif est conçu en tant que civière de transport.

10. Dispositif de transport selon la revendication 9,
**caractérisé en ce que**
une surface d'appui oblongue (21) est pourvue qui est reliée au cadre (4''') par le moyen d'une pièce de réception (23) qui pivote autour d'un axe vertical (22).

11. Dispositif de transport selon la revendication 10,
**caractérisé en ce que**
la surface d'appui (21) a des coins arrondis sur au moins une extrémité.

12. Dispositif de transport selon l'une quelconque des revendications 1 à 8,
**caractérisé en ce que**
le dispositif est conçu comme une charrette ayant au moins une roue (11") sur une extrémité.

13. Dispositif de transport selon la revendication 12,
**caractérisé en ce que**
la surface d'appui est en forme de bac.

14. Dispositif de transport selon une quelconque des revendications 1 à 8,
**caractérisé en ce que**
le dispositif est conçu comme une poussette pour enfants.

15. Dispositif de transport selon une quelconque des revendications 1 à 8,
**caractérisé en ce que**
le dispositif est conçu comme un traîneau.
